# EUROPEAN PATENT APPLICATION

(11) **EP 4 125 061 A1**
(43) Date of publication of application: **01.02.2023**
(21) Application number: 22165366.0
(22) Date of filing: 30.03.2022
(51) Int. Cl.: G06V 20/56, G06K 9/62, B60W 40/02, G01C 21/36

(54) **ROAD MODEL GENERATION METHOD AND DEVICE**

(30) Priority: 30.07.2021 CN 202110871523
(71) Applicant: Nio Technology (Anhui) Co., Ltd, Hefei City, Anhui 230611 (CN)
(72) Inventor: ZHOU, Hang, Hefei City, Anhui, 230611 (CN)
(74) Representative: Vossius & Partner Patentanwälte Rechtsanwälte mbB

(57) **Abstract**

The disclosure relates to a road model generation method, the method including: receiving lane line information from a plurality of sources; determining a reference lane line; and performing arbitration and then selecting, from the lane line information from the plurality of sources, a first lane line corresponding to the reference lane line, where the first lane line and the reference lane line together form left and right lane lines of a present lane. The disclosure further relates to a road model generation device, a computer storage medium, an autonomous driving system, and a vehicle.

## Description

### Technical Field

The disclosure relates to the field of autonomous driving/driver assistance control, and more particularly, to a road model generation method and device, a computer storage medium, an autonomous driving system, and a vehicle.

### Background Art

Among functions for driver assistance, road model construction is a foundation for many functions for assistance. In a road model, information about positions of left and right lane lines of a lane in which a present vehicle is located, types of the lane lines (as to whether they can be crossed), and specific information about adjacent lanes, which are very important, and especially the ability to maintain stable tracking and updating in multiple frames and to continuously output reliable information in complex scenarios (such as rain or strong light) serve as the basis for road model construction.

A high-definition map and visual detection, as two most important sources for providing information about lane lines, are usually used to construct a road model. Information from a high-definition map is independent of weather and an environment, but is strongly correlated with positioning information, a frequency of information updates made by a provider, and accuracy. Visual detection presents a high real-time performance, but is considerably susceptible to weather and surrounding vehicles and obstructions. Using information about lane lines from a single source in all scenarios cannot ensure the accuracy and stability of a constructed road model.

### Summary of the Disclosure

One or more embodiments of the disclosure provide a technical solution for generating a road model by comprehensively using lane lines (for example, a high-definition map lane line and a visually detected lane line) from a plurality of sources.

According to an aspect of the disclosure, there is provided a road model generation method, the method including: receiving lane line information from a plurality of sources; determining a reference lane line; and performing arbitration and then selecting, from the lane line information from the plurality of sources, a first lane line corresponding to the reference lane line, where the first lane line and the reference lane line together form left and right lane lines of a present lane.

As an addition or alternative to the above solution, in the above method, the lane line information from the plurality of sources includes a high-definition map lane line and/or a visually detected lane line.

As an addition or alternative to the above solution, in the above method, the performing arbitration and then selecting, from the lane line information from the plurality of sources, a first lane line corresponding to the reference lane line include: determining the first lane line as the high-definition map lane line when there is no visually detected lane line.

As an addition or alternative to the above solution, in the above method, the performing arbitration and then selecting, from the lane line information from the plurality of sources, a first lane line corresponding to the reference lane line include: determining the first lane line as the visually detected lane line when there is the visually detected lane line but no high-definition map lane line.

As an addition or alternative to the above solution, in the above method, the performing arbitration and then selecting, from the lane line information from the plurality of sources, a first lane line corresponding to the reference lane line include: determining whether the visually detected lane line matches the high-definition map lane line when there are both the visually detected lane line and the high-definition map lane line; and determining the first lane line as the visually detected lane line if the visually detected lane line does not match the high-definition map lane line.

As an addition or alternative to the above solution, in the above method, the performing arbitration and then selecting, from the lane line information from the plurality of sources, a first lane line corresponding to the reference lane line further include: determining a lane line, which is closest to the reference lane line, as the first lane line when the visually detected lane line matches the high-definition map lane line.

As an addition or alternative to the above solution, in the above method, a distance between the first lane line and the reference lane line satisfies both a condition of a maximum lane width and a condition of a minimum lane width, where the condition of the maximum lane width and the condition of the minimum lane width are set based on lane information in a previous frame.

As an addition or alternative to the above solution, the above method further includes: allocating a plurality of lane lines to corresponding lanes after the arbitration and selection of the lane line; and outputting a corresponding road model.

As an addition or alternative to the above solution, the above method further includes: making a lane-change determination before the arbitration and selection of the lane line; and updating information about the present lane upon determining that a present vehicle has performed a lane change.

As an addition or alternative to the above solution, in the above method, the receiving lane line information from a plurality of sources includes: filtering out some of the lane lines from the plurality of sources based on confidence levels of the lane lines from the plurality of sources.

According to another aspect of the disclosure, there is provided a road model generation device, the device including: a receiving apparatus configured to receive lane line information from a plurality of sources; a determination apparatus configured to determine a reference lane line; and an arbitration and selection apparatus configured to perform arbitration and then select, from the lane line information from the plurality of sources, a first lane line corresponding to the reference lane line, where the first lane line and the reference lane line together form left and right lane lines of a present lane.

As an addition or alternative to the above solution, in the above device, the lane line information from the plurality of sources includes a high-definition map lane line and/or a visually detected lane line.

As an addition or alternative to the above solution, in the above device, the arbitration and selection apparatus is configured to determine the first lane line as the high-definition map lane line when there is no visually detected lane line.

As an addition or alternative to the above solution, in the above device, the arbitration and selection apparatus is configured to determine the first lane line as the visually detected lane line when there is the visually detected lane line but no high-definition map lane line.

As an addition or alternative to the above solution, in the above device, the arbitration and selection apparatus is configured to: determine whether the visually detected lane line matches the high-definition map lane line when there are both the visually detected lane line and the high-definition map lane line; and determine the first lane line as the visually detected lane line if the visually detected lane line does not match the high-definition map lane line.

As an addition or alternative to the above solution, in the above device, the arbitration and selection apparatus is further configured to determine a lane line, which is closest to the reference lane line, as the first lane line when the visually detected lane line matches the high-definition map lane line.

As an addition or alternative to the above solution, in the above device, a distance between the first lane line and the reference lane line satisfies both a condition of a maximum lane width and a condition of a minimum lane width, where the condition of the maximum lane width and the condition of the minimum lane width are set based on lane information in a previous frame.

As an addition or alternative to the above solution, the above device further includes: an allocation apparatus configured to allocate a plurality of lane lines to corresponding lanes after the arbitration and selection of the lane line; and an output apparatus configured to output a corresponding road model.

As an addition or alternative to the above solution, the above device further includes: a lane-change determination apparatus configured to make a lane-change determination before the arbitration and selection of the lane line; and an update apparatus configured to update information about the present lane upon determining that a present vehicle has performed a lane change.

As an addition or alternative to the above solution, in the above device, the receiving apparatus is configured to filter out some of the lane lines from the plurality of sources based on confidence levels of the lane lines from the plurality of sources.

According to still another aspect of the disclosure, there is provided a computer storage medium including instructions, where when the instructions are run, the method as described above is performed.

According to yet another aspect of the disclosure, there is provided an autonomous driving system, the system including the device as described above.

According to still yet another aspect of the disclosure, there is provided a vehicle, the vehicle including the autonomous driving system as described above.

In the road model generation solution according to the embodiments of the disclosure, arbitration is performed and the first lane line corresponding to the reference lane line is then selected from the lane line information from the plurality of sources, such that more accurate lane line information can be obtained, thereby avoiding drawbacks of different signal sources and improving the stability of road information in the road model.

### Brief Description of the Drawings

The above and other objectives and advantages of the disclosure will be more thorough and clearer from the following detailed description in conjunction with the drawings, where the same or similar elements are represented by the same reference numerals.
FIG. 1 is a schematic flowchart of a road model generation method according to an embodiment of the disclosure;
FIG. 2 is a schematic structural diagram of a road model generation device according to an embodiment of the disclosure;
FIG. 3 is a schematic flowchart of a road model generation method according to an embodiment of the disclosure;
FIG. 4 is a schematic flowchart of arbitration and selection of a lane line according to an embodiment of the disclosure; and
FIG. 5 is a schematic flowchart of arbitration of lane lines from a plurality of sources according to an embodiment of the disclosure.

### Detailed Description of Embodiments

To make the objectives, technical solutions, and advantages of the disclosure clearer, specific embodiments of the disclosure will be described in further detail below with reference to the accompanying drawings. It can be understood that the specific embodiments described herein are used merely to explain the disclosure, rather than limit the disclosure.

In addition, it should also be noted that, for ease of description, the accompanying drawings show only parts related to the disclosure rather than all content of the disclosure. Before discussing exemplary embodiments in more detail, it should be noted that some exemplary embodiments are described as processes or methods that are depicted as flowcharts. Although the flowcharts describe various operations (or steps) as sequential processing, many of the operations may be implemented in parallel, concurrently, or simultaneously. In addition, the sequence of the operations may be rearranged. The processing may be terminated when its operations are completed, but it may also have additional steps not included in the accompanying drawings. The processing may correspond to methods, functions, procedures, subroutines, subprograms, and so on.

Although exemplary embodiments are described as using a plurality of units to perform exemplary processes, it should be understood that these exemplary processes may also be performed by one or more modules.

Moreover, the control logic of the disclosure may be included on a computer-readable medium as executable program instructions, which are implemented by a processor or the like. Instances of the computer-readable medium include, but are not limited to, a ROM, a RAM, an optical disc, a magnetic tape, a floppy disk, a flash drive, a smart card, and an optical data storage apparatus. A computer-readable recording medium may also be distributed in a computer system connected to a network, so that the computer-readable medium is stored and implemented in a distributed manner, for example, through a vehicle telematics service or a controller area network (CAN).

Unless specifically mentioned or obvious from context, as used herein, the term "approximately" is understood to be within a range of normal tolerance in the art, for example, within two standard deviations of a mean.

It should be understood that the term "vehicle" or another similar term used herein includes general motor vehicles, such as passenger vehicles (including sport utility vehicles, buses, trucks, etc.) and various commercial vehicles, and includes hybrid vehicles, electric vehicles, etc. A hybrid vehicle is a vehicle with two or more power sources, such as a vehicle powered by a gasoline engine and an electric motor.

The road model generation solution according to various exemplary embodiments of the disclosure is described below in detail with reference to the accompanying drawings.

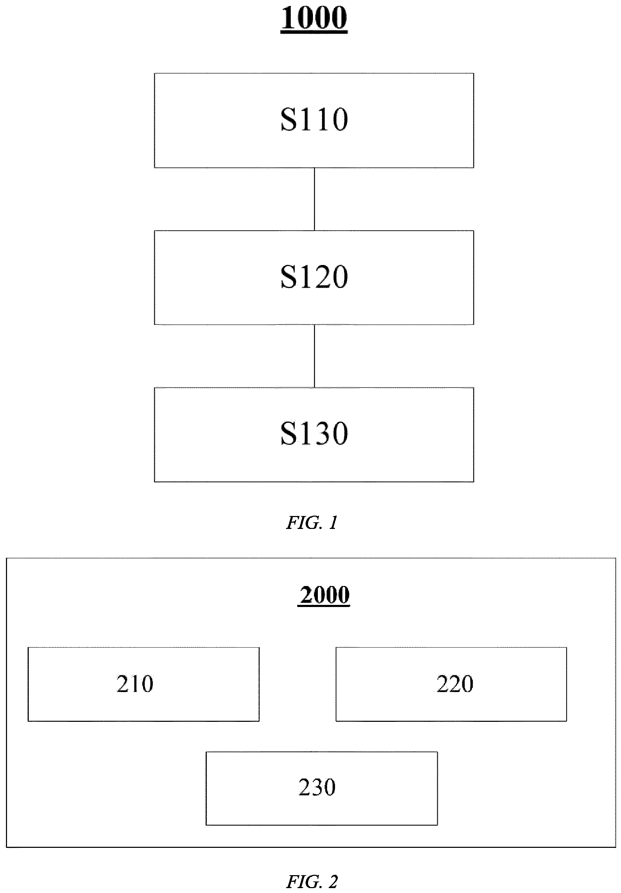

FIG. 1 is a schematic flowchart of a road model generation method 1000 according to an embodiment of the disclosure. As shown in FIG. 1, the road model generation method 1000 includes the following steps:
step S110 of receiving lane line information from a plurality of sources;
step S120 of determining a reference lane line; and
step S130 of performing arbitration and then selecting, from the lane line information from the plurality of sources, a first lane line corresponding to the reference lane line, where the first lane line and the reference lane line together form left and right lane lines of a present lane.

The term "road model", as the name suggests, is obtained by means of modeling of a road on which a vehicle is traveling (or surrounding roads). For example, among functions for driver assistance, road model construction is a foundation for many functions for assistance, because an autonomous driving system or a driver assistance system can identify possible impacts of any road condition on a vehicle only when the system has comprehensive knowledge of a road on which the vehicle is traveling, to ensure that the vehicle traveling at a high speed will not be in danger in any cases. The road model includes information about positions of left and right lane lines of a lane in which a present vehicle is located, types of the lane lines (as to whether they can be crossed), and specific information about adjacent lanes.

In the context of the disclosure, the "lane line information from the plurality of sources" includes a high-definition map lane line and/or a visually detected lane line. A high-definition map and visual detection are two most important sources for providing information about lane lines. The "high-definition map lane line" refers to lane line information obtained from a high-definition map, and the "visually detected lane line" refers to lane line information detected by various visual sensors (such as a camera and an ultrasonic radar). Information from a high-definition map is independent of weather and an environment, but is strongly correlated with positioning information, a frequency of information updates made a provider, and accuracy. Visual detection presents a high real-time performance, but is considerably susceptible to weather and surrounding vehicles and obstructions.

The term "reference lane line" refers to a lane line as a reference, where the lane line may be a left lane line or a right lane line of a present lane (namely, a lane in which a current vehicle is traveling). For example, when the reference lane line is the left lane line of the present lane, the first lane line corresponding to the reference lane line is the right lane line of the present lane. On the contrary, when the reference lane line is the right lane line of the present lane, the first lane line corresponding to the reference lane line is the left lane line of the present lane.

More accurate lane line information can be obtained by performing arbitration and then selecting, from the lane line information from the plurality of sources, the first lane line corresponding to the reference lane line. In addition, problems of possible missing detection and false detection in some scenarios can also be addressed by performing arbitration and then selecting, from the lane line information from the plurality of sources, the first lane line corresponding to the reference lane line. For example, in a scenario in which missing visual detection is caused due to a physical lane line being covered or partially abraded during normal traveling, lane line information from other sources may be selected to offset the deficiency of the visually detected lane line, thereby improving the stability of road information.

In an embodiment, step S110 includes: filtering out some of the lane lines from the plurality of sources based on confidence levels of the lane lines from the plurality of sources. For example, lane lines with a low confidence level are filtered out.

In an embodiment, step S120 includes: forming the reference lane line based on a lane line of the present lane in a previous frame and a lane line of the present lane that is visually detected in a present frame.

In an embodiment, step S130 includes: determining the first lane line as the high-definition map lane line when there is no visually detected lane line. In another embodiment, step S130 includes: determining the first lane line as the visually detected lane line when there is the visually detected lane line but no high-definition map lane line. In still another embodiment, step S130 includes: determining whether the visually detected lane line matches the high-definition map lane line when there are both the visually detected lane line and the high-definition map lane line; and determining the first lane line as the visually detected lane line if the visually detected lane line does not match the high-definition map lane line, otherwise determining a lane line, which is closest to the reference lane line, as the first lane line. Considering that visually detected lane line information presents a higher real-time performance, when two lane lines from different sources for describing a lane line at a same position are considerably different from each other, visual detection should be of a higher priority. On the basis of drawbacks and advantageous characteristics of the two signal sources, i.e., visual detection and a high-definition map, the arbitration and selection solution in the plurality of embodiments described above facilitates obtaining an accurate road model that contains more information.

In an embodiment, a distance between the first lane line and the reference lane line satisfies both a condition of a maximum lane width and a condition of a minimum lane width, where the condition of the maximum lane width and the condition of the minimum lane width are set based on lane information in a previous frame.

Although not shown in FIG. 1, the road model generation method 1000 further includes: allocating a plurality of lane lines to corresponding lanes after the arbitration and selection of the lane line; and outputting a corresponding road model. In an embodiment, compared with visual detection, the high-definition map provides more thorough lane line information, that is, it can provide more lane lines. Therefore, more universal logic is used to deal with the uncertainty about the number of lane lines during allocation of the lane lines to the lanes.

In an embodiment, the road model generation method 1000 further includes: making a lane-change determination before the arbitration and selection of the lane line; and updating information about the present lane upon determining that a present vehicle has performed a lane change. The lane-change determination can involve determining, from two aspects, whether there is a lane-change action: (1) whether there is a change in a role of the visually detected lane line (if a role of a lane line for forward and backward tracking changes from a left lane line to a right lane line, it is determined that the present vehicle may have performed a lane change to the left); and (2) whether there is a significant action of line-crossing of the present vehicle. In an embodiment, when either of the above two aspects is satisfied, double verification is further performed based on a line-crossing condition of the present vehicle, to confirm whether there is a lane-change action. In this way, a false lane-change status caused due to false visual detection and wrong role information can be prevented. In an embodiment, verification of whether there is a lane change is further performed by determining whether there is a change in a lane identity (id) of the present vehicle, such that a false lane-change action can be prevented. Moreover, in an embodiment, during a lane-change process, whether the present vehicle has performed a lane change is determined by tracking changes in relative positions between the present vehicle and left and right lane lines.

In an embodiment, because there is an error in map positioning, when in complex scenarios such as when going up or down ramps, there is a considerable error in a position of a lane line with a relatively distant starting position. In this case, if a high-definition map lane line is directly added into the road model, the high-definition map lane line may have a relatively big change in subsequent frames, which affects performance. Therefore, a lane line added to the high-definition map is merely limited to a line with a starting point within a pre-determined distance (for example, 10 meters).

In addition, those skilled in the art readily understand that the road model generation method 1000 provided in the one or more embodiments of the disclosure can be implemented by using a computer program. For example, when a computer storage medium (such as a USB flash drive) storing the computer program is connected to a computer, the road model generation method according to one or more embodiments of the disclosure can be performed by running the computer program.

Referring to FIG. 2, FIG. 2 is a schematic structural diagram of a road model generation device 2000 according to an embodiment of the disclosure. As shown in FIG. 2, the road model generation device 2000 includes: a receiving apparatus 210, a determination apparatus 220, and an arbitration and selection apparatus 230. The receiving apparatus 210 is configured to receive lane line information from a plurality of sources; the determination apparatus 220 is configured to determine a reference lane line; and the arbitration and selection apparatus 230 is configured to perform arbitration and then select, from the lane line information from the plurality of sources, a first lane line corresponding to the reference lane line, where the first lane line and the reference lane line together form left and right lane lines of a present lane.

The term "road model", as the name suggests, is obtained by means of modeling of a road on which a vehicle is traveling (or surrounding roads). For example, among functions for driver assistance, road model construction is a foundation for many functions for assistance, because an autonomous driving system or a driver assistance system can identify possible impacts of any road condition on a vehicle only when the system has comprehensive knowledge of a road on which the vehicle is traveling, to ensure that the vehicle traveling at a high speed will not be in danger in any cases. The road model includes information about positions of left and right lane lines of a lane in which a present vehicle is located, types of the lane lines (as to whether they can be crossed), and specific information about adjacent lanes.

In the context of the disclosure, the "lane line information from the plurality of sources" includes a high-definition map lane line and/or a visually detected lane line. A high-definition map and visual detection are two most important sources for providing information about lane lines. The "high-definition map lane line" refers to lane line information obtained from a high-definition map, and the "visually detected lane line" refers to lane line information detected by various visual sensors (such as a camera and an ultrasonic radar). Information from a high-definition map is independent of weather and an environment, but is strongly correlated with positioning information, a frequency of information updates made a provider, and accuracy. Visual detection presents a high real-time performance, but is considerably susceptible to weather and surrounding vehicles and obstructions.

The term "reference lane line" refers to a lane line as a reference, where the lane line may be a left lane line or a right lane line of a present lane (namely, a lane in which a current vehicle is traveling). For example, when the reference lane line is the left lane line of the present lane, the first lane line corresponding to the reference lane line is the right lane line of the present lane. On the contrary, when the reference lane line is the right lane line of the present lane, the first lane line corresponding to the reference lane line is the left lane line of the present lane.

The road model generation device 2000 can obtain more accurate lane line information by performing arbitration and then selecting, from the lane line information from the plurality of sources, the first lane line corresponding to the reference lane line. In addition, the device 2000 can also address problems of possible missing detection and false detection in some scenarios by performing arbitration and then selecting, from the lane line information from the plurality of sources, the first lane line corresponding to the reference lane line. For example, in a scenario in which missing visual detection is caused due to a physical lane line being covered or partially abraded during normal traveling, the device 2000 can select lane line information from other sources to offset the deficiency of the visually detected lane line, thereby improving the stability of road information.

In an embodiment, the receiving apparatus 210 is configured to filter out some of the lane lines from the plurality of sources based on confidence levels of the lane lines from the plurality of sources. For example, the receiving apparatus 210 is configured to filter out, from among lane lines from the plurality of sources, lane lines with a confidence level less than a threshold. A lane and a lane line are definitely continuous in a plurality of frames, and a lane line has a unique id in the plurality of frames. Therefore, when a number of newly added lane lines are obtained in a present frame, the receiving apparatus 210 can determine, with reference to lane line information in a previous frame, confidence levels of the newly added lane lines and then make selections.

In an embodiment, the determination apparatus 220 is configured to determine the reference lane line based on a lane line of the present lane in a previous frame and a lane line of the present lane that is visually detected in a present frame.

In an embodiment, the arbitration and selection apparatus 230 is configured to determine the first lane line as the high-definition map lane line when there is no visually detected lane line. In another embodiment, the arbitration and selection apparatus 230 is configured to determine the first lane line as the visually detected lane line when there is the visually detected lane line but no high-definition map lane line. In still another embodiment, the arbitration and selection apparatus 230 is configured to: determine whether the visually detected lane line matches the high-definition map lane line when there are both the visually detected lane line and the high-definition map lane line; and determine the first lane line as the visually detected lane line if the visually detected lane line does not match the high-definition map lane line. It can be learned that when two lane lines from different sources for describing a lane line at a same position are considerably different from each other, visual detection is of a higher priority. This takes into full consideration of a characteristic that visually detected lane line information presents a higher real-time performance. In this embodiment, the arbitration and selection apparatus 230 is further configured to determine a lane line, which is closest to the reference lane line, as the first lane line when the visually detected lane line matches the high-definition map lane line.

In an embodiment, a distance between the first lane line and the reference lane line satisfies both a condition of a maximum lane width and a condition of a minimum lane width, where the condition of the maximum lane width and the condition of the minimum lane width are set based on lane information in a previous frame.

In an embodiment, although not shown in FIG. 2, the above device 2000 may further include: an allocation apparatus configured to allocate a plurality of lane lines to corresponding lanes after the arbitration and selection of the lane line; and an output apparatus configured to output a corresponding road model. In an embodiment, the device 2000 may further include: a lane-change determination apparatus configured to make a lane-change determination before the arbitration and selection of the lane line; and an update apparatus configured to update information about the present lane upon determining that a present vehicle has performed a lane change.

In one or more embodiments, the road model generation device 2000 may be integrated in an autonomous driving system or a driver assistance system. In an embodiment, the driver assistance system refers to advanced driver assistance systems, namely, ADAS systems. The ADAS systems use a variety of sensors (such as a millimeter-wave radar, a laser radar, a monocular/binocular camera, and satellite navigation) mounted on an automobile to sense the surrounding environment at any time during traveling of the automobile, collect data, identify, monitor, and track a still/moving object, and perform system operations and analysis in combination with navigation map data, allowing for a driver to be aware of potential dangers in advance, thereby effectively improving the comfort and safety of the automobile during traveling. In an embodiment, the advanced driver assistance systems include a traffic message channel (TMC) system, an intelligent speed adaptation or intelligent speed advice (ISA) system, a vehicular communication system, an adaptive cruise control (ACC) system, a lane departure warning system (LDWS), a lane keep assistance system, a collision avoidance system or a pre-crash system, a night vision system, an adaptive light control system, a pedestrian protection system, an automatic parking system, a traffic sign recognition system, a blind spot detection system, a driver drowsiness detection system, a hill descent control system, and an electric vehicle warning sounds system.

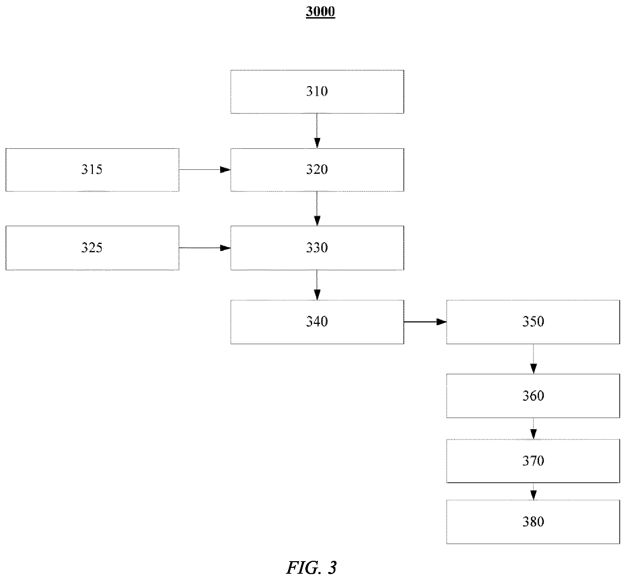

FIG. 3 is a schematic flowchart of a road model generation method 3000 according to an embodiment of the disclosure. As shown in FIG. 3, the method 3000 includes the steps as follows.

In step 310, a lane line in a previous frame is updated based on vehicle position estimate (VPE). For example, the lane line in the previous frame is adaptively updated based on a lateral/longitudinal corner deviation of the vehicle. The updated lane line in the previous frame based on displacement of a present vehicle may be used as a reference for an update of a lane line in a present frame. In step 315, a visually detected lane line in the present frame is obtained. In step 320, matching of the visual lane line with the lane line in the previous frame is performed. In step 325, a high-definition map lane line in the present frame is obtained. In step 330, the visual lane line that has been matched with the lane line in the previous frame in step 320 is fused with information about the high-definition map lane line. For example, after fusion, information indicating whether there is a map lane line that matches each visual lane line will be added to the visual lane line, and a lane line added to the high-definition map will also be added into a lane line list. Then, in step 340, related checking and filtering are performed on a lane line in the lane line list, where one of the strategies is: Because there is an error in map positioning, when in complex scenarios such as when going up or down ramps, there is a considerable error in a position of a lane line with a relatively distant starting position. In this case, if the map lane line is directly added into the road model, the map lane line may have a relatively big change in subsequent frames, which affects performance. Therefore, a lane line added to the map is merely limited to a line with a starting point within a preset distance (for example, 5 meters).

In step 350, a determination of a lane-change status is made, and the present lane is updated. The step for lane-change determination involves determining, mainly from two aspects, whether there is a lane-change action: (1) whether there is a change in a role of the visually detected lane line (a role of a lane line for forward and backward tracking changes from a left lane line to a right lane line, that is, the present vehicle may have performed a lane change to the left); and (2) whether there is a significant action of line-crossing of the present vehicle. When either of the above two conditions is satisfied, double verification may further be performed based on a line-crossing condition of the present vehicle, thereby preventing a false lane-change status caused due to false visual detection and wrong role information.

After a lane-change determination is made and the present lane is updated, in step 360, arbitration and selection of a lane line are performed. For example, the accuracy of a lane line newly added in the present frame may be determined based on lane information in the previous frame. Left and right lane lines of the present lane are selected from a plurality of lane lines, and other lane lines are allocated based on the two lane lines. Therefore, in this step, arbitration is performed and correct lane lines are then selected from a plurality of lane lines as the left and right lane lines of the present lane.

After the selection of the left and right lane lines of the present lane, in step 370, the lane lines are allocated to corresponding lanes. For example, the other lane lines are allocated and successively updated onto each lane based on position relationships of the lane lines.

Finally, in step 380, a road model is output.

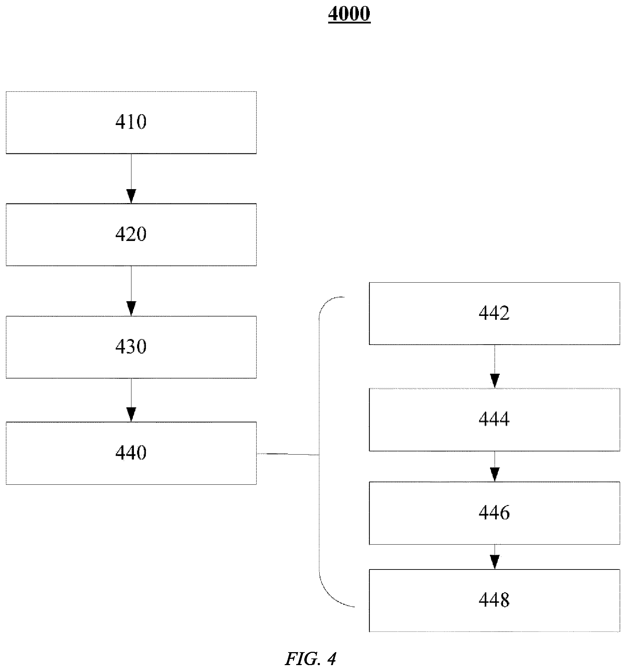

FIG. 4 is a schematic flowchart 4000 of arbitration and selection of a lane line according to an embodiment of the disclosure. First, in step 410, lane lines are sorted by positions. Then, in step 420, a maximum lane width and a minimum lane width are set based on lane information in a previous frame. In step 430, a reference lane line is formed based on a lane line of a present lane in a previous frame and a lane line of the present lane that is visually detected in a present frame. In step 440, a missing left or right lane line of the present lane is found based on the reference lane line.

Referring to FIG. 4, in an embodiment, step 440 further includes: step 442 of finding, based on positions, a closest potential visually detected lane line and high-definition map lane line that have a distance greater than a minimum lane width. step 444 of determining whether the lane lines satisfy a condition of a maximum lane width; step 446 of selecting a visually detected lane line or a high-definition map lane line according to an arbitration rule; and step 448 of performing a reverse correction based on historical information about the present lane.

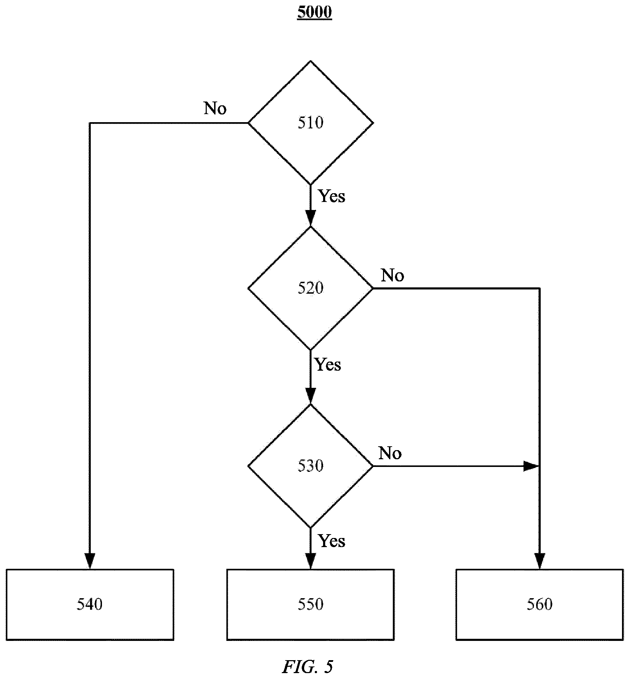

FIG. 5 is a schematic flowchart 5000 of arbitration of lane lines from a plurality of sources according to an embodiment of the disclosure. As shown in FIG. 5, in step 510, it is determined whether there is a visually detected lane line. If there is no visually detected lane line, the process directly proceeds to step 540, that is, selecting a high-definition map lane line. If there is a visually detected lane line, it is further determined, in step 520, whether there is a map lane line; and if there is no map lane line, the process directly proceeds to step 560, that is, selecting the visually detected lane line. If there are both a visually detected lane line and a high-definition map lane line, it is determined, in step 530, whether the two lines can match each other. If the two lines cannot match each other, the visually detected map line has a higher priority, otherwise the process proceeds to step 550, that is, selecting a closest lane line, which is a lane line closest to the reference lane line.

By combining information about the high-definition map lane line, and determining a confidence level of the high-definition map lane line according to a certain evaluation criterion, problems of missing detection and false detection of the visually detected lane line in some scenarios can be prevented. Comprehensive use of lane line information from a plurality of sources can provide complete road information and improve the stability of the road information, thereby improving a success rate of an automatic lane change and the performance of target detection and guidance.

In conclusion, in the road model generation solution according to the embodiments of the disclosure, arbitration is performed and the first lane line corresponding to the reference lane line is then selected from the lane line information from the plurality of sources, such that more accurate lane line information can be obtained, thereby avoiding drawbacks of different signal sources and improving the stability of road information in the road model.

The road model generation solution according to the embodiments of the disclosure is especially applicable to missing or false visual detection of lane lines and other scenarios, including, but not limited to: a lane-change failure caused due to excessively low confidence level of a visual lane line during a lane-change process; missing or false visual detection caused due to a physical lane line being covered or partially abraded during normal traveling; and missing of a visually detected lane line in the case of going up or down ramps and there being a number of vehicles in adjacent lanes.

Although only some embodiments of the disclosure are described in the specification, it will be appreciated by those skilled in the art that the disclosure may be embodied in many other forms without departing from the essence and scope thereof. Accordingly, the presented examples and implementations are considered to be illustrative rather than restrictive, and the disclosure may encompass various modifications and replacements without departing from the spirit and scope of the disclosure that are defined by the appended claims.

## Claims

1. A road model generation method, comprising:
receiving lane line information from a plurality of sources;
determining a reference lane line; and
performing arbitration and then selecting, from the lane line information from the plurality of sources, a first lane line corresponding to the reference lane line, wherein the first lane line and the reference lane line together form left and right lane lines of a present lane.

2. The method according to claim 1, wherein the lane line information from the plurality of sources comprises a high-definition map lane line and/or a visually detected lane line.

3. The method according to claim 2, wherein the performing arbitration and then selecting, from the lane line information from the plurality of sources, a first lane line corresponding to the reference lane line comprise:
determining the first lane line as the high-definition map lane line when there is no visually detected lane line.

4. The method according to claim 2 or 3, wherein the performing arbitration and then selecting, from the lane line information from the plurality of sources, a first lane line corresponding to the reference lane line comprise:
determining the first lane line as the visually detected lane line when there is the visually detected lane line but no high-definition map lane line.

5. The method according to any one of claims 2 to 4, wherein the performing arbitration and then selecting, from the lane line information from the plurality of sources, a first lane line corresponding to the reference lane line comprise:
determining whether the visually detected lane line matches the high-definition map lane line when there are both the visually detected lane line and the high-definition map lane line; and
determining the first lane line as the visually detected lane line if the visually detected lane line does not match the high-definition map lane line.

6. The method according to claim 5, wherein the performing arbitration and then selecting, from the lane line information from the plurality of sources, a first lane line corresponding to the reference lane line further comprise:
determining a lane line, which is closest to the reference lane line, as the first lane line when the visually detected lane line matches the high-definition map lane line.

7. The method according to any one of claims 1 to 6, wherein a distance between the first lane line and the reference lane line satisfies both a condition of a maximum lane width and a condition of a minimum lane width, wherein the condition of the maximum lane width and the condition of the minimum lane width are set based on lane information in a previous frame.

8. The method according to any one of claims 1 to 7, further comprising:
allocating a plurality of lane lines to corresponding lanes after the arbitration and selection of the lane line; and
outputting a corresponding road model.

9. The method according to any one of claims 1 to 8, further comprising:
making a lane-change determination before the arbitration and selection of the lane line; and
updating information about the present lane upon determining that a present vehicle has performed a lane change.

10. The method according to any one of claims 1 to 9, wherein the receiving lane line information from a plurality of sources comprises:
filtering out some of the lane lines from the plurality of sources based on confidence levels of the lane lines from the plurality of sources.

11. A road model generation device, preferably being adapted to perform the method of any one of claims 1 to 10, the device comprising:
a receiving apparatus configured to receive lane line information from a plurality of sources;
a determination apparatus configured to determine a reference lane line; and
an arbitration and selection apparatus configured to perform arbitration and then select, from the lane line information from the plurality of sources, a first lane line corresponding to the reference lane line, wherein the first lane line and the reference lane line together form left and right lane lines of a present lane.

12. The device according to claim 11, wherein the lane line information from the plurality of sources comprises a high-definition map lane line and/or a visually detected lane line.

13. The device according to claim 12, wherein the arbitration and selection apparatus is configured to determine the first lane line as the high-definition map lane line when there is no visually detected lane line.

14. The device according to claim 12 or 13, wherein the arbitration and selection apparatus is configured to determine the first lane line as the visually detected lane line when there is the visually detected lane line but no high-definition map lane line.

15. A computer storage medium, comprising instructions, wherein when the instructions are run, a road model generation method is performed, preferably the method of any one of claims 1 to 10, the method comprising:
receiving lane line information from a plurality of sources;
determining a reference lane line; and
performing arbitration and then selecting, from the lane line information from the plurality of sources, a first lane line corresponding to the reference lane line, wherein the first lane line and the reference lane line together form left and right lane lines of a present lane.
